# EUROPÄISCHE PATENTSCHRIFT

(11) **EP 2 151 588 B1**
(45) Veröffentlichungstag und Bekanntmachung des Hinweises auf die Patenterteilung: **14.05.2014**
(21) Anmeldenummer: 09164712.3
(22) Anmeldetag: 07.07.2009
(51) Int. Cl.: F15B 17/00, F16D 25/08, F16D 48/02, F15B 21/04

(54) **Hydraulisches Betätigungssystem für eine Kraftfahrzeugkupplung mit einer Entlüftungseinrichtung**
Hydraulic actuation system for a motor vehicle with a ventilation device
Système d'actionnement hydraulique pour un embrayage de véhicule automobile doté d'un dispositif d'aération

(30) Priorität: 08.08.2008 DE 102008041115
(43) Veröffentlichungstag der Anmeldung: 10.02.2010
(73) Patentinhaber: ZF Friedrichshafen AG, 88038 Friedrichshafen (DE)
(72) Erfinder: Frank, Markus, 97440, Werneck (DE); Koberstein, Ralf, 97762, Hammelburg (DE)

(56) Entgegenhaltungen:
- DE-A1- 10 101 438
- DE-A1- 19 648 683
- FR-A1- 2 864 186
- GB-A- 2 018 399

## Beschreibung

Die Erfindung betrifft ein hydraulisches Betätigungssystem für eine Kraftfahrzeugkupplung mit einem Selbstentlüftungsventil gemäß dem Oberbegriff von Patentanspruch 1.

Bei einem solchen, aus der Praxis hinreichend bekannten hydraulischen Betätigungssystem ist der Geberzylinder gegenüber dem Nehmerzylinder üblicherweise geodätisch höher angeordnet und mittels einer vom Nehmerzylinder aus zumeist kontinuierlich oder stufenweise ansteigenden Druckleitung verbunden, so dass sich in dem hydraulischen Leitungssystem eingeschlossene Gasvolumina selbständig oder fluidströmungsunterstützt in Richtung des Geberzylinders bewegen und dort über eine Nachlaufeinrichtung aus dem Druckraum austreten können und in einem unter Atmosphärendruck stehenden Fluid-Vorratsbehälter abgegeben werden. Dazu ist es beispielsweise aus der DE 199 53 286 A1 bekannt, an dem Kolben des Geberzylinders Schnüffelnuten oder ähnliche Mittel auszubilden, weiche in der ausgefahrenen Kolbenstellung eine gehäusefeste Primärdichtung strömungsmäßig überbrücken und so eine Fluidverbindung zwischen dem Druckraum und dem drucklosen Nachlaufraum zum Nachlaufen von Fluid und zum Entweichen von Gaseinschlüssen schaffen.

Es ist weiterhin auch bekannt, räumlich im Bereich des Nehmerzylinders eine Entlüftungseinrichtung vorzusehen. Diese besteht beispielsweise, wie in der DE 196 48 683 A1beschrieben, aus einem im Druckraum in das Zylindergehäuse eingeschraubten Entlüftungselement, weiches zur Entlüftung des hydraulischen Betätigungssystems zumindest teilweise herausgeschraubt werden muss, um einen Entlüftungskanal zum Entweichen von Gasen freizugeben.

Es ist insbesondere bei einer sehr langen zwischen dem Geber- und dem Nehmerzylinder verlegten Druckleitung und bei einem ungünstigen Leitungsverlauf, wobei sich der geodätisch niedrigste Punkt des Druckraumes zwischen den beiden Druckmittelzylindern befindet, sehr umständlich, das nehmerzylinderseitig angeordnete Entlüftungselement zu erreichen und an dieser Position eine Entlüftung vorzunehmen.

Mit der DE 101 01 438 A1 ist ein Hydrauliksystem zur Betätigung eines automatisierten Schaltgetriebes mit einer Entlüftungseinrichtung zur selbsttätigen Entlüftung bekannt geworden. Die Entlüftungseinrichtung weist dabei einen in einem Fluid-Druckraum mündenden Entlüftungskanal und einen Ventilkörper auf, welcher den Entlüftungskanal in Abhängigkeit von einem wirkenden Druck in einer ersten, druckraumnahen und in einer zweiten, druckraumentfernten Sperrstellung verschließen und diesen in einer zwischen diesen Sperrstellungen liegenden Durchlassstellung öffnen kann. Ein Entlüftung erfolgt somit bei jedem mit einem Kupplungsbetätigungsvorgang einhergehenden Druckaufbau.

Die Erfindung stellt sich die Aufgabe, ein hydraulisches Betätigungssystem mit einer noch weiter verbesserten Entlüftbarkeit, insbesondere abseits des Geberzylinders zu schaffen.

Die vorstehend genannte Aufgabe wird bei einem gattungsgemäßen hydraulischen Betätigungssystem durch die im Kennzeichen des Patentanspruchs 1 angegebenen Merkmale gelöst.

Es wird somit ein hydraulisches Betätigungssystem für eine Kraftfahrzeugkupplung vorgeschlagen, weiches zunächst zwei Druckmittelzylinder umfasst, von denen einer als Geberzylinder und der andere als Nehmerzylinder fungiert, wobei jeder Druckmittelzylinder ein Gehäuse mit einem darin in einer Laufbuchse verschiebbar angeordneten Kolben beinhaltet, der einen variablen Kolben-Druckraum begrenzt und wobei an dem Kolben-Druckraum ein Druckanschluss ausgeführt ist. Das hydraulische Betätigungssystem umfasst weiter einen Druck-Fluidkanal mit einer Druckleitung, weiche die Druckräume des Geber- und des Nehmerzylinders mittels deren Druckanschlüsse unter Ausbildung eines gemeinsamen Fluid-Druckraumes verbindet und umfasst des Weiteren eine Entlüftungseinrichtung zur Entlüftung des Fluid-Druckraumes.

Gemäß der vorliegenden Erfindung zeichnet sich hydraulisches Betätigungssystem dadurch aus, dass die Entlüftungseinrichtung ein Entlüftungselement mit einem im Fluid-Druckraum mündenden Entlüftungskanal und mit einem Ventilkörper aufweist, der den Entlüftungskanal in Abhängigkeit von einer an diesem wirkenden Kraftdifferenz in einer ersten, druckraumnahen und in einer zweiten, druckraumentfernten Sperrstellung verschließen und diesen in einer zwischen diesen Sperrstellungen liegenden Durchlassstellung öffnen kann, wobei der Ventilkörper durch eine Fremdanregung zum Übergang in die Durchlassstellung angeregt wird und wobei die Fremdanregung durch eine laufende Antriebsmaschine des Fahrzeuges erfolgt.

Die vorgeschlagene Lösung bietet den Vorteil, dass eine Entlüftung des hydraulischen Systems nicht nur im drucklosen Zustand, beispielsweise bei einer Wartung des Systems, sondern auch im Normalbetrieb bei einem anstehenden Fluiddruck, also bei einer Kupplungsbetätigung erfolgen kann. Wenn die Ausgangsstellung des Ventilkörpers durch die erste, strömungsmäßig druckraumnahe Sperrstellung definiert ist, so kann dieser bei einem Druckaufbau während einer Kupplungsbetätigung diese erste Sperrstellung verlassen und zunächst in eine Durchlassstellung übergehen, in welcher in dem hydraulischen System eingeschlossene Gasvolumina durch den Entlüftungskanal aus dem Fluid-Druckraum austreten können. Zur Bei einem noch weiter ansteigendem Fluiddruck geht der Ventilkörper von der Durchlassstellung in die zweite Sperrstellung über. Beim Entlasten des Kupplungspedals zum Schließen der Kupplung nimmt der Ventilkörper wiederum zunächst die Durchlassstellung und dann wieder die Ausgangsstellung, also die erste Sperrstellung ein. Da die Pedalbetätigung zum Öffnen und Schließen der Kupplung kontinuierlich und in der Regel sehr zügig erfolgt, ist die Öffnungsphase des Entlüftungselements bzw. des Entlüftungskanals insgesamt sehr kurz. Das dabei mit austretende Fluid wird günstigerweise aufgefangen und mittels einer zwischen dem Ausgang des Entlüftungselements und dem Fluid-Nachlaufbehälter verlegten Fluidleitung wieder in das Betätigungssystem zurückgeführt. Ein Zurückfließen von Fluid direkt in den Druckraum über den Entlüftungskanal ist aufgrund der bei einer Betätigung wirkenden Fluid-Druckdifferenz und der Wirkung des Entlüftungselements als Rückschlagventil ausgeschlossen. Neben der zuvor erläuterten betätigungsabhängigen Entlüftung kann das hydraulische System auch betätigungsunabhängig entlüftet werden, indem der Ventilkörper durch eine Fremdanregung mittels einer laufende Antriebsmaschine des Fahrzeuges von dessen Ausgangsstellung ausgehend zum Übergang in die Durchlassstellung bzw. in den Durchlassbereich angeregt wird.

Weitere Ausgestaltungen und Weiterbildungen der Erfindung sind in den abhängigen Ansprüchen aufgeführt.

Bezüglich der konkreten Ausgestaltung des Entlüftungselements bieten sich einem Fachmann zahlreiche Möglichkeiten. So kann der Ventilkörper beispielsweise als verlagerbarer oder auch als verformbarer Ventilkörper ausgeführt sein. Gemäß einer vorteilhaften Variante weist das Entlüftungselement eine Ventilkammer mit zwei, den Sperrstellungen zugeordneten z.B. kegelförmigen Ventilsitzen auf, zwischen denen der Ventilkörper verlagerbar angeordnet ist. Der Ventilkörper kann hierbei als Kugel, Kolben oder dergleichen ausgeführt sein. Zur Realisierung einer Durchlassstellung bzw. genauer eines Durchlassbereiches kann die Ventilkammer zwischen den Ventilsitzen radial erweitert sein, so dass Gase und Fluid am Außenbereich des Ventilkörpers vorbei strömen können. Alternativ besteht auch die Möglichkeit, das Entlüftungselement mit Kanälen zu versehen, deren Mündungen in einer Sperrstellung wechselseitig abgedeckt werden und somit verschlossen sind. Mit weiterem Vorteil ist die Ventilkammer innerhalb des Entlüftungskanals ausgeführt, wobei sich diese dann auch hauptsächlich in Richtung des Entlüftungskanals erstrecken kann.

Mit Vorteil weist der Ventilkörper in dessen Ventilkammer eine definierte Ausgangsstellung auf, in der der Ventilkörper in Richtung der ersten, druckraumnahen Sperrstellung belastet wird. Dieses kann allein durch die Gravitationskraft oder durch eine andere wirkende Kraft z.B. durch Federkraft oder falls der Ventilkörper aus einem Ferromagnetischen Material besteht durch die Wirkung einer Magnetkraft dargestellt werden.

Das Entlüftungselement kann prinzipiell an jeder Position innerhalb des Fluid-Druckraums angeordnet werden, bevorzugt ist dieses jedoch als Einsatzteil zur Anordnung in einem Gehäuse, insbesondere in einer Zugangsbohrung des Zylindergehäuses des Geber- oder Nehmerzylinders ausgeführt.

Die vorgenannte Ausführung als Einsatzteil kann zu einer manuellen Entlüftung des hydraulischen Systems ausgenutzt werden, wobei das Entlüftungselement im Weiteren wie die aus der DE 196 48 683 A1 bekannte Entlüftungsschraube ausgeführt wird. Dazu ist das Entlüftungselement in dem Gehäuse mittels einer Axialdichtung gegenüber dem Fluid-Druckraum abgedichtet und weist auf der dem Fluid-Druckraum abgewandten Seite eine von der Axialdichtung beabstandete Radialdichtung mit einem größeren Außendurchmesser auf, wobei zwischen diesen Dichtungen ein von der Außenumfangsfläche des Entlüftungselementes zum Entlüftungskanal verlaufender Kanal verläuft. Bei Abheben der Axialdichtung von dessen Gehäusedichtfläche können somit im Druckraum enthaltene Gaseinschlüsse und/oder Fluid an der Axialdichtung vorbei in den Stichkanal zum Entlüftungskanal geleitet werden und über diesen aus dem Fluid-Druckraum austreten.

Die Erfindung wird anhand der nachfolgenden Beschreibung und der Figuren beispielhaft erläutert. Es zeigen:
- Fig. 1: eine schematische Darstellung einer hydraulischen Betätigungseinrichtung für eine Kraftfahrzeugkupplung;
- Fig. 2: eine teilweise Schnittdarstellung des in Fig. 1 schematisch dargestellten Entlüftungselements.

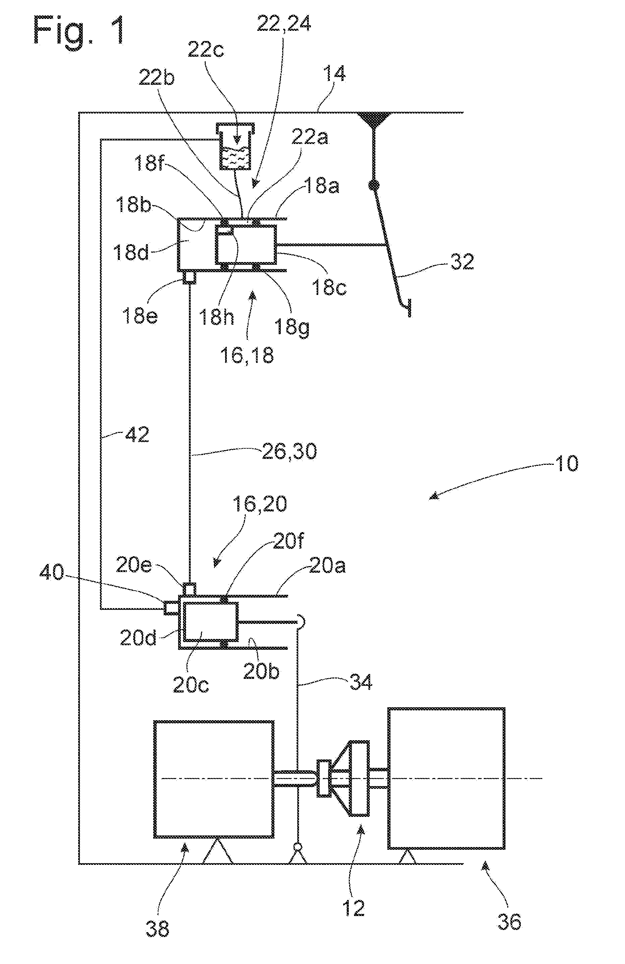

Gemäß Fig. 1 wird schematisch ein hydraulisches Betätigungssystem 10 zum Betätigen einer Kraftfahrzeugkupplung 12 gezeigt, weiche an einem Chassis 14 eines Kraftfahrzeugs angeordnet ist und zwei Druckmittelzylinder 16 umfasst, von denen einer als Geberzylinder 18 und der andere als Nehmerzylinder 20 fungiert. Der Geberzylinder 18 umfasst ein Gehäuse 18a mit einer inneren Laufbuchse 18b, in der längsverschiebbar ein Kolben 18c geführt ist und der einen variablen Druckraum 18d mit einem Druckanschluss 18e begrenzt. Des Weiteren ist der Geberzylinder 18 zur Kompensation eines Fluidverlusts und zur gleichzeitigen Entlüftung des Betätigungssystems 10 mit einer Nachlaufeinrichtung 22 an sich bekannter Bauart ausgestattet.

Der Geberzylinder 18 weist zur Abdichtung des Druckraumes 18d eine gehäusefest angeordnete Primärdichtung 18f auf. Zur Bildung eines Nachlaufraumes 22a der Nachlaufeinrichtung 22 umfasst der Geberzylinder 18 eine weitere im Gehäuse 18a angeordnete und von der Primärdichtung 18f beabstandete Sekundärdichtung 18g sowie einen in den Nachlaufraum 22a mündenden Nachlaufkanal, weicher über eine Nachlaufleitung 22b mit einem Fluid-Vorratsbehälter bzw. Nachlaufbehälter 22c verbunden ist. In der ausgefahrenen Stellung des Kolbens 18c kann somit Fluid aus dem Nachlaufbehälter 22c in den Nachlaufraum 22a und weiter durch am Kolben 18c ausgeführte Schnüffelöffnungen bzw. -Ausnehmungen 18h in den Druckraum 18d einströmen und in der entgegengesetzten Richtung können gleichzeitig in dem hydraulischen System 10 eingeschlossene Gasvolumina entweichen. Auf diese Weise stellt die Nachlaufeinrichtung 22 gleichzeitig eine Entlüftungseinrichtung 24 des hydraulischen Systems 10 dar.

Der Nehmerzylinder 20 umfasst ein Gehäuse 20a mit einer inneren Laufbuchse 20b, in der längsverschiebbar ein Kolben20c geführt ist und der einen variablen Druckraum 20d mit einem Druckanschluss 20e begrenzt, wobei der Druckraum 20d ebenfalls durch eine gehäusefeste Dichtung 20f gegenüber der Umgebung abgedichtet ist.

Das hydraulische Betätigungssystem 10 umfasst weiter einen Druck-Fluidkanal 26, der die Druckräume 18d, 20d des Geber- und des Nehmerzylinders 18, 20 durch deren Druckanschlüsse 18e, 20e zur Bildung eines mit einem Fluid befüllten gemeinsamen Druckraumes verbindet, wozu zwischen den Druckmittelzylindern 18, 20 eine Druckleitung 30 verlegt und mittels zeichnerisch hier nicht dargestellten Steckverbindern mit den Druckanschlüssen 18e, 20e verbunden ist.

Der Kolben 18c des Geberzylinders 18 kann durch ein Pedal 32 betätigt werden und am Geberzylinder 18 in eine eingefahrene Stellung gebracht werden, woraufhin sich der Kolben 20c des Nehmerzylinders 20 verschiebt und sich dort in eine ausgefahrene Stellung begibt und eine Kupplungsgabel 34 zum Ausrücken der Kupplung 12 an einem als Verbrennungsmotor ausgebildeten Antriebsaggregat 36 steuert. Bei einer Entlastung des Pedals 32 zum Einrücken der Kupplung 12 bewegt sich der Kolben 18c des Geberzylinders 18 wieder in dessen ausgefahrene Stellung und der Kolben 20c des Nehmerzylinders 20 wieder in dessen eingefahrene Stellung. Die Kupplung 12 ist zur Übertragung eines Drehmoments eingangsseitig mit der Abtriebswelle des Verbrennungsmotors 36 und ausgangsseitig mit einem Schaltgetriebe 38 verbunden.

Soweit bisher beschrieben, entspricht das vorliegende Betätigungssystem 10 dem eingangs erläuterten Stand der Technik.

Zusätzlich zu der Entlüftung über den Geberzylinder umfasst das hydraulische Betätigungssystem 10 ein in diesem Ausführungsbeispiel als Einsatzteil ausgeführtes Entlüftungselement 40 zur selbsttätigen und bei Bedarf auch manuellen Entlüftung, welches in eine am Zylindergehäuse 20a des Nehmerzylinders 20 am Kolbendruckraum 20d ausgeführte Zugangsbohrung eingeschraubt ist.

Das Entlüftungselement 40 ist ausgangsseitig mittels einer Fluidleitung 42 mit dem Fluid-Nachlaufbehälter verbunden, wodurch bei einer Entlüftung aus dem Fluid-Druckraum ausgetretenes Fluid in den Nachlaufbehälter 22c gefördert werden kann. Da diese Fluidleitung jedoch keinem, gegenüber dem Atmosphärendruck höheren Druck standhalten muss, bestehen auch keine Anforderungen hinsichtlich einer besonderen Druckfestigkeit.

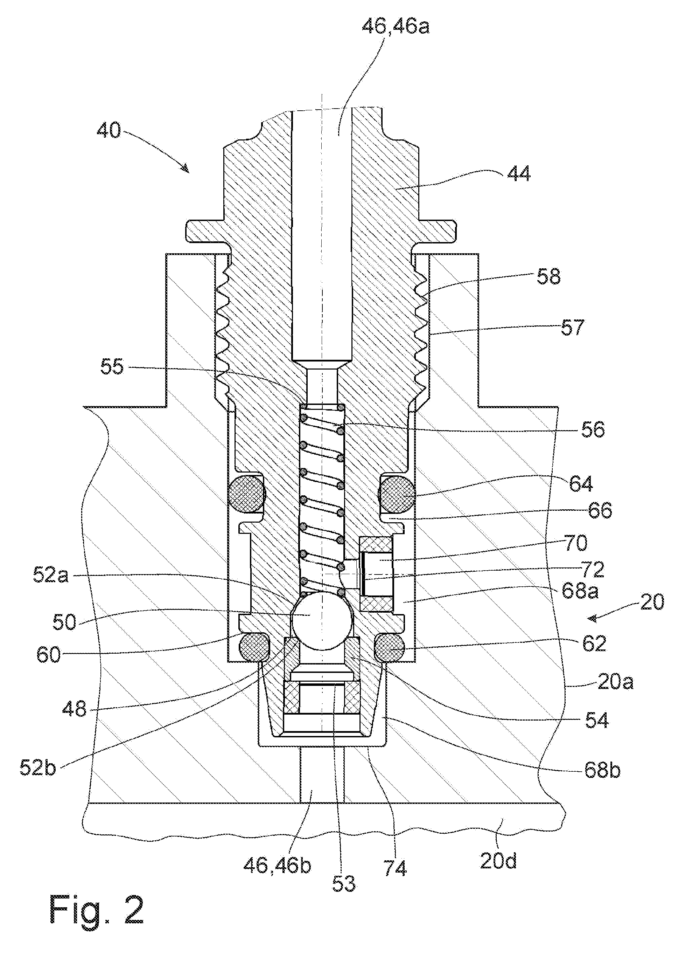

Das in Fig. 2 in einer Schnittdarstellung teilweise gezeigte und in ein Nehmerzylindergehäuse 20a eingeschraubte Entlüftungselement 40 umfasst einen mehrfach gestuften, im Wesentlichen jedoch kreiszylindrischen Hauptkörper 44, der aus einem gegenüber Bremsfluid resistenten Kunststoff oder aus einem metallischen Werkstoff z.B. Aluminium oder Edelstahl hergestellt ist. Zentral, entlang der Mittenachse des Hauptkörpers 44 verläuft eine ebenfalls mehrfach im Durchmesser gestufte Bohrung 46a, welche einen Teil eines über eine gestufte Zugangsbohrung 46b im Nehmerzylinder 20 mit dem Kolbendruckraum 20d in Verbindung stehenden Entlüftungskanals 46 bildet.

Innerhalb der Bohrung 46a ist eine Ventilkammer 48 ausgebildet, in der sich ein als Kugel geformter Ventilkörper 50 zwischen zwei, in axialer Richtung beabstandeten kegelförmigen Ventilsitzen 52a, 52b verlagern kann. Der dem Druckraum 20d strömungsmäßig nahe Ventilsitz 52b ist hierbei durch eine Kunststoff-Einpresshülse 54 dargestellt, der druckraumseitig ein Filtersieb 53 zum Schutz des Entlüftungselements 40 vor Verunreinigungen vorgelagert ist. Es ist in Fig. 2 erkennbar, dass der Ventilkörper 50 innerhalb dessen Ventilkammer 48 einen gewissen radialen und auch einen sehr begrenzten axialen Spielraum aufweist und dass der Ventilkörper 50 durch die Wirkung einer sich an einem Absatz 55 innerhalb der Bohrung 46a abstützenden Druckfeder 56 in Richtung des druckraumseitigen Ventilsitzes 52b belastet wird. Auf diese Weise werden für das Entlüftungselement 40 eine erste Sperrstellung, die der in Fig. 2 dargestellten Lage entspricht, eine zweite Sperrstellung bei Anlage der Kugel 50 an den Ventilsitz 52a und eine Durchlassstellung definiert, bei der sich die Kugel 50 axial zwischen den Sperrstellungen befindet. Der axiale Spielraum des Ventilkörpers 50 ist dabei kleiner als etwa 1 mm und im beschriebenen Ausführungsbeispiel auf etwa 0,3mm begrenzt.

Zur Anordnung am Nehmerzylinder 20 ist an einem Außenumfangsbereich des Entlüftungselements 40 ein zu einem Innengewinde 57 des Nehmerzylinders 20 korrespondierendes Außengewinde 58 ausgebildet. Die Abdichtung gegenüber dem Druckraum 20d erfolgt mittels eines in einer Nut bzw. an einem Absatz 60 eingesetzten und als Axialdichtung wirkenden O-Ringdichtelementes 62. Eine weiteres, jedoch als Radialdichtung wirkendes O-Ringdichtelement 64 mit einem gegenüber dem vorgenannten Dichtelement vergrößertem Außendurchmesser ist davon axial beabstandet in eine Umfangsnut 66 eingesetzt. Der Bereich axial zwischen den Dichtelementen 62, 64 übersteigt den Durchmesser des Dichtelementes 62 nicht, so dass dadurch zwischen dem Entlüftungselement 40 und der Innenumfangsfläche der gestuften Zylinderbohrung 46b ein Ringraum 68a gebildet wird, in dem ein von der Außenumfangsfläche des Entlüftungselementes 40 zum Entlüftungskanal 46 verlaufender Stichkanal 70 mündet, in weichen ebenfalls ein Filtersieb 72 eingesetzt ist. Ein weiterer Ringraum 68b erstreckt sich von der Axialdichtung 62 ausgehend in Richtung des Druckraumes 20 bis an einen Absatz 74 der Bohrung 46b. Die Dichtelemente 62, 64 sind zur Vereinfachung in deren unverspannten Zustand gezeigt.

Gemäß einer ersten Funktionsweise ist das Entlüftungselement 40 so dimensioniert, dass bei einem ansteigendem Fluiddruck im Betätigungssystem 10 infolge einer Betätigung des Kupplungspedals 32 der Ventilkörper 50 bereits vor dem Erreichen des Trennpunktes der Kupplung 12 von dem druckraumseitigen Ventilsitz 52b abhebt und somit von der ersten Sperrstellung in eine Durchlassstellung übergeht. Das Öffnen erfolgt hierbei bereits im Niederdruckbereich bei einem Druck unterhalb einem bar, insbesondere unterhalb etwa 0,8bar. Infolgedessen wird der Entlüftungskanal 46 geöffnet, wobei kurzzeitig im Druckraum 20d eingeschlossene Gasvolumina und/oder Fluid in Richtung aus dem Druckraum 20d austreten können und an der Außenfläche des Ventilkörpers 50 vorbei in Richtung der Niederdruckseite des Entlüftungselements 40 strömen können. Durch die am Ausgang des Entlüftungselements 40 angeschlossene Leitung 42 erfolgt deren Weitertransport zum Fluid-Vorratsbehälter 22c, wo vorhandene Gase das Betätigungssystem 10 verlassen und Fluid über die Nachlaufeinrichtung 22 wieder dem gemeinsamen Druckraum zugeführt werden kann.

Bei einer noch weiteren Pedalbetätigung steigt dazu korrespondierend der Fluiddruck noch weiter an, wobei sich der Ventilkörper 50 von der Durchlassstellung ausgehend weiter bewegt, um sich schließlich an dem Ventilsitz 52 anzulegen, wodurch das Entlüftungselement 40 in die zweite Sperrstellung übergeht und den Entlüftungskanal 46 wieder verschließt. Der Übergang in diese zweite Sperrstellung erfolgt hierbei bei einem Fluiddruck der kleiner ist als der Fluiddruck beim Erreichen des Trennpunktes der Kupplung 12. Da der Fluiddruck bei den bekannten hydraulischen Betätigungssystemen vor dem Erreichen des Kupplungstrennpunktes ein Maximum durchläuft, würde ansonsten kein hinreichender Fluiddruck zum Öffnen der Kupplung 12 und zu deren zeitweisen Offenhalten erzeugt werden können.

Die bei der beschriebenen Betätigung auftretende Unterbrechung bzvv. Abschwächung beim Druckaufbau innerhalb des hydraulischen Systems 10 ist ausgesprochen kurzzeitig und wird von dem Fahrzeugführer nicht wahrgenommen.

Beim Entlasten des Kupplungspedals 32 zum Schließen der Kupplung 12 geht der Ventilkörper 50 von der zweiten Sperrstellung, d.h. von dem Ventilsitz 52a ausgehend, über die Durchlassstellung bzw. über den Durchlassbereich wieder in die erste, die Ausgangsstellung definierende Sperrstellung unter Anlage an dem Ventilsitz 52b über. Auch hierbei können in der Durchlassstellung wieder Gasvolumina und/oder Fluid aus dem Druckraum 20d austreten.

Gemäß einer weiteren, zweiten Funktionsweise kann der Ventilkörper auch ohne die Betätigung des Kupplungspedals, d.h. ohne einen beginnenden Betätigungs-Fluid-Druckaufbau und zwar allein durch den im unbetätigten Zustand herrschenden Fluiddruck in Verbindung mit einer Fremdanregung zum Übergang von der druckraumseitigen Ausgangsstellung, d.h. der ersten Sperrstellung in die Durchlassstellung angeregt werden. Dazu ist das Entlüftungselement so dimensioniert, dass die Fremdanregung durch die laufende Antriebsmaschine des Fahrzeuges, hier dem Verbrennungsmotor 36, insbesondere ab etwa 6000 Kurbelwellenumdrehungen/min erfolgen kann. Wenn der Verbrennungsmotor 36 läuft, so wird über die Kupplung 12 der Nehmerzylinder 20 und mit diesem das Entlüftungselement 40 zu Schwingungen angeregt. Ist die auf den Ventilkörper 50 in dessen Ausgangsstellung wirkende Vorspannkraft, im vorliegenden Beispiel durch die Wahl der Federkonstante, entsprechend eingestellt, so kann auch der Ventilkörper 50 in dessen Ventilkammer 48 Schwingungen von der ersten zur zweiten Sperrstellung ausführen, wobei Gasvolumina und/oder Fluid jeweils beim Durchgang durch die Öffnungsstellung über den Entlüftungskanal 46 entweichen können.

Das über das Entlüftungselement 40 austretende Gas- und/oder Fluid-Volumen kann generell von einer üblichen Betätigungsgeschwindigkeit, d.h. eines im hydraulischen Betätigungssystems 10 auftretenden Fördervolumens ausgehend, durch die konstruktive Ausgestaltung an einen gewünschten Betrag angepasst werden, wobei neben der Ausgestaltung der Ventilkammer 48 und des Ventilkörpers 50 insbesondere auch die Größe der Vorspannkraft der Druckfeder 56 einer Optimierung bedarf.

Neben der beschriebenen selbsttätigen Entlüftung kann mittels des Entlüftungselements 40 auch eine manuelle Entlüftung des hydraulischen Betätigungssystems 10 vorgenommen werden, indem das Entlüftungselement 40 zumindest teilweise aus der Zugangsbohrung 46b am Nehmerzylinder 20 herausgeschraubt wird. Dabei hebt die Axialdichtung 62 von deren Dichtsitz ab, so dass im Druckraum 20d eingeschlossene Gasvolumina und/oder Fluid unter einer Umgehung der Ventilkammer 48 über die Ringräume 68a, b, den Stichkanal 70 in die Bohrung 46 und weiter in die Leitung 42 und den Nachlaufbehälter 22c übergeleitet werden können.

## Patentansprüche

1. Hydraulisches Betätigungssystem (10) für eine Kraftfahrzeugkupplung, umfassend
- zwei Druckmittelzylinder (16), von denen einer als Geberzylinder (18) und der andere als Nehmerzylinder (20) fungiert, wobei jeder Druckmittelzylinder (16) aufweist
- ein Gehäuse (18a, 20a), einen darin in einer Laufbuchse (18b, 20b) verschiebbar angeordneten Kolben (18c, 20c), der einen variablen Kolben-Druckraum (18d, 20d) begrenzt und wobei an dem Kolben-Druckraum (18d, 20d) ein Druckanschluss (18e, 20e) ausgeführt ist, und
wobei das hydraulische Betätigungssystem (10) weiter umfasst
- einen Druck-Fluidkanal (26) mit einer Druckleitung (30), die die Druckräume (18d, 20d) des Geber- (18) und des Nehmerzylinders (20) mittels deren Druckanschlüsse (18e, 20e) unter Ausbildung eines gemeinsamen Fluid-Druckraumes verbindet und
- eine Entlüftungseinrichtung zur Entlüftung des Fluid-Druckraumes,
**dadurch gekennzeichnet,**
**dass** die Entlüftungseinrichtung ein Entlüftungselement (40) mit einem im Fluid-Druckraum mündenden Entlüftungskanal (46) und mit einem Ventilkörper (50) aufweist, der den Entlüftungskanal (46) in Abhängigkeit von einer an diesem wirkenden Kraftdifferenz in einer ersten, druckraumnahen und in einer zweiten, druckraumentfernten Sperrstellung verschließen und diesen in einer zwischen diesen Sperrstellungen liegenden Durchlassstellung öffnen kann, wobei der Ventilkörper (50) durch eine Fremdanregung zum Übergang in die Durchlassstellung angeregt wird und wobei die Fremdanregung durch eine laufende Antriebsmaschine (36) des Fahrzeuges erfolgt.

2. Hydraulisches Betätigungssystem nach Anspruch 1, wobei das hydraulische Betätigungssystem (10) einen mit dem Geberzylinder (18) über eine Nachlaufleitung (22b) in Fluidverbindung stehenden Fluid-Nachlaufbehälter (22c) umfasst,
**dadurch gekennzeichnet, dass** der Fluid-Nachlaufbehälter (22c) mittels einer Fluidleitung (42) mit dem Ausgang des Entlüftungselements (40) verbunden ist.

3. Hydraulisches Betätigungssystem nach Anspruch 1 oder 2,
**dadurch gekennzeichnet, dass** das Entlüftungselement (40) eine Ventilkammer (48) mit zwei, den Sperrstellungen zugeordneten druckraumnahen (52b) und druckraumentfernten Ventilsitzen (52a) aufweist, zwischen denen der Ventilkörper (50) verlagerbar angeordnet ist.

4. Hydraulisches Betätigungssystem nach Anspruch 3,
**dadurch gekennzeichnet, dass** die Ventilkammer (48) innerhalb des Entlüftungskanals (46) ausgeführt ist.

5. Hydraulisches Betätigungssystem nach Anspruch 3 oder 4,
**dadurch gekennzeichnet, dass** der Ventilkörper (50) in dessen Ausgangsstellung in Richtung der ersten Sperrstellung belastet ist und an dem druckraumnahen Ventilsitz (52b) anliegt.

6. Hydraulisches Betätigungssystem nach einem der vorhergehenden Ansprüche,
**dadurch gekennzeichnet, dass** bei einem Druckaufbau beim Betätigen der Kraftfahrzeugkupplung das Ventilelement 40 unterhalb eines einem Kupplungstrennpunkt zugeordneten Fluid-Druckes die druckraumentfernte Sperrstellung einnimmt.

7. Hydraulisches Betätigungssystem nach einem der vorhergehenden Ansprüche, **dadurch gekennzeichnet,**
**dass** das Entlüftungselement (40) als Einsatzteil zur Anordnung in einem Gehäuse (20a), insbesondere in einer Zugangsbohrung (46b) des Zylindergehäuses des Geber- oder Nehmerzylinders (16) ausgeführt ist.

8. Hydraulisches Betätigungssystem nach Anspruch 7, **dadurch gekennzeichnet,**
**dass** das Entlüftungselement (40) in dem Gehäuse (20a) mittels einer Axialdichtung (62) gegenüber dem Fluid-Druckraum abgedichtet ist und dass das Entlüftungselement (40) auf der dem Fluid-Druckraum abgewandten Seite eine von der Axialdichtung (62) beabstandete Radialdichtung (64) mit einem gegenüber der Axialdichtung (62) größeren Außendurchmesser aufweist, wobei zwischen diesen Dichtungen (62, 64) ein von der Außenumfangsfläche des Entlüftungselementes (40) zum Entlüftungskanal (46) verlaufender Kanal (70) verläuft.

## Claims

1. Hydraulic actuation system (10) for a motor vehicle clutch, comprising
- two pressure-medium cylinders (16), of which one functions as a master cylinder (18) and the other as a slave cylinder (20), each pressure-medium cylinder (16) having
- a housing (18a, 20a), a piston (18c, 20c) which is arranged displaceably therein in a liner (18b, 20b) and which delimits a variable piston pressure space (18d, 20d), and a pressure connection (18e, 20e) being formed on the piston pressure space (18d, 20d), and the hydraulic actuation system (10) comprising, further,
- a pressure fluid duct (26) with a pressure line (30) which connects the pressure spaces (18d, 20d) of the master cylinder (18) and of the slave cylinder (20) by means of their pressure connections (18e, 20e), thereby forming a common fluid pressure space, and
- a ventilation device for ventilating the fluid pressure space,
**characterized**
**in that** the ventilation device has a ventilation element (40) with a ventilation duct (46) issuing in the fluid pressure space and with a valve body (50) which can close the ventilation duct (46) as a function of a force difference acting on this, in a first shut-off position near the pressure space and in a second shut-off position remote from the pressure space, and can open said ventilation duct in a passage position lying between these shut-off positions, the valve body (50) being excited to change to the passage position as a result of external excitation, and the external excitation taking place by means of a running engine (36) of the vehicle.

2. Hydraulic actuation system according to Claim 1, the hydraulic actuation system (10) comprising a fluid replenishing tank (22c) which is in fluid connection with the master cylinder (18) via a replenishing line (22b), **characterized in that** the fluid replenishing tank (22c) is connected to the outlet of the ventilation element (40) by means of a fluid line (42).

3. Hydraulic actuation system according to Claim 1 or 2, **characterized in that** the ventilation element (40) has a valve chamber (48) with two valve seats, one (52b) near the pressure space and one (52a) remote from the pressure space, which are assigned to the shut-off positions and between which the valve body (50) is arranged displaceably.

4. Hydraulic actuation system according to Claim 3, **characterized in that** the valve chamber (48) is formed inside the ventilation duct (46).

5. Hydraulic actuation system according to Claim 3 or 4, **characterized in that** the valve body (50), in its initial position, is loaded in the direction of the first shut-off position and bears against the valve seat (52b) near the pressure space.

6. Hydraulic actuation system according to one of the preceding claims, **characterized in that**, in the event of a pressure build-up during the actuation of the motor vehicle clutch, the valve element (40) assumes the shut-off position remote from the pressure space below a fluid pressure which is assigned to a clutch separation point.

7. Hydraulic actuation system according to one of the preceding claims, **characterized in that** the ventilation element (40) is designed as an insert part to be arranged in a housing (20a), in particular in an access bore (46b) of the cylinder housing of the master or slave cylinder (16).

8. Hydraulic actuation system according to Claim 7, **characterized in that** the ventilation element (40) is sealed off in the housing (20a) with respect to the fluid pressure space by means of an axial seal (62), and **in that** the ventilation element (40) has, on the side facing away from the fluid pressure space, a radial seal (64) spaced apart from the axial seal (62) and having an outside diameter larger than that of the axial seal (62), a duct (70) which runs from the outer circumferential surface of the ventilation element (40) to the ventilation duct (46) running between these seals (62, 64).

## Revendications

1. Système d'actionnement hydraulique (10) pour un embrayage de véhicule automobile, comportant
- deux cylindres de fluide sous pression (16), parmi lesquels l'un sert de maître-cylindre (18) et l'autre sert de cylindre récepteur (20), chaque cylindre de fluide sous pression (16) comprenant un boîtier (18a, 20a), un piston (18c, 20c) disposé de manière coulissante dans une chambre de cylindre (18b, 20b) dans celui-ci, lequel piston limite un espace de pression de piston (18d, 20d) variable, et un raccord de pression (18e, 20e) étant réalisé au niveau de l'espace de pression de piston (18d, 20d), et le système d'actionnement hydraulique (10) comportant en outre
- un canal fluidique de pression (26) comprenant une conduite de pression (30) qui relie les espaces de pression (18d, 20d) du maître-cylindre (18) et du cylindre récepteur (20) au moyen de leurs raccords de pression (18e, 20e) en formant un espace de pression de fluide commun, et
- un dispositif d'aération pour l'aération de l'espace de pression de fluide,
**caractérisé en ce que**
le dispositif d'aération comprend un élément d'aération (40) pourvu d'un canal d'aération (46) débouchant dans l'espace de pression de fluide et pourvu d'un corps de soupape (50) qui peut fermer le canal d'aération (46), en fonction d'une différence de force agissant sur celui-ci, dans une première position de blocage proche de l'espace de pression et dans une deuxième position de blocage éloignée de l'espace de pression, et qui peut ouvrir le canal d'aération dans une position de passage située entre ces positions de blocage, le corps de soupape (50) étant excité par une excitation externe pour la transition à la position de passage, et l'excitation externe s'effectuant au moyen d'une machine d'entraînement (36) en fonctionnement du véhicule.

2. Système d'actionnement hydraulique selon la revendication 1, le système d'actionnement hydraulique (10) comprenant un récipient d'alimentation de compensation de fluide (22c) en liaison fluidique avec le maître-cylindre (18) par le biais d'une conduite d'alimentation de compensation (22b),
**caractérisé en ce que** le récipient d'alimentation de compensation de fluide (22c) est relié à la sortie de l'élément d'aération (40) au moyen d'une conduite de fluide (42).

3. Système d'actionnement hydraulique selon la revendication 1 ou 2,
**caractérisé en ce que** l'élément d'aération (40) comprend une chambre de soupape (48) pourvue de deux sièges de soupape, proche de l'espace de pression (52b) et éloigné de l'espace de pression (52a), associés aux positions de blocage, entre lesquels sièges de soupape le corps de soupape (50) est disposé de manière déplaçable.

4. Système d'actionnement hydraulique selon la revendication 3,
**caractérisé en ce que** la chambre de soupape (48) est réalisée à l'intérieur du canal d'aération (46).

5. Système d'actionnement hydraulique selon la revendication 3 ou 4,
**caractérisé en ce que**, dans sa position de départ, le corps de soupape (50) est sollicité en direction de la première position de blocage et s'applique contre le siège de soupape (52b) proche de l'espace de pression.

6. Système d'actionnement hydraulique selon l'une quelconque des revendications précédentes,
**caractérisé en ce que**, lors d'une montée en pression lors de l'actionnement de l'embrayage de véhicule automobile, l'élément de soupape (40) occupe, en dessous d'une pression de fluide associée à un point de séparation d'embrayage, la position de blocage éloignée de l'espace de pression.

7. Système d'actionnement hydraulique selon l'une quelconque des revendications précédentes, **caractérisé en ce que**
l'élément d'aération (40) est réalisé sous forme de pièce d'insertion destinée à être disposée dans un boîtier (20a), en particulier dans un alésage d'accès (46b) du boîtier de cylindre du maître-cylindre ou du cylindre récepteur (16).

8. Système d'actionnement hydraulique selon la revendication 7, **caractérisé en ce que**
l'élément d'aération (40) est étanchéifié dans le boîtier (20a) par rapport à l'espace de pression de fluide au moyen d'un joint d'étanchéité axial (62), et **en ce que**, du côté opposé à l'espace de pression de fluide, l'élément d'aération (40) comprend un joint d'étanchéité radial (64) espacé du joint d'étanchéité axial (62), lequel joint d'étanchéité radial présente un diamètre extérieur plus grand par rapport au joint d'étanchéité axial (62), un canal (70) s'étendant à partir de la surface périphérique extérieure de l'élément d'aération (40) jusqu'au canal d'aération (46) s'étendant entre ces joints d'étanchéité (62, 64).
